# EUROPÄISCHE PATENTSCHRIFT

(11) **EP 4 307 542 B1**
(45) Veröffentlichungstag und Bekanntmachung des Hinweises auf die Patenterteilung: **16.09.2026**
(21) Anmeldenummer: 23183157.9
(22) Anmeldetag: 03.07.2023
(51) Int. Cl.: H02K 15/30, H02K 15/35

(54) **SCHWEISSMASCHINE, FERTIGUNGSSYSTEM UND VERFAHREN ZUM VERSCHWEISSEN VON FREIEN ENDEN VON STABLEITERN**
WELDING MACHINE, MANUFACTURING SYSTEM AND METHOD FOR WELDING FREE ENDS OF BAR CONDUCTORS
MACHINE DE SOUDAGE, SYSTÈME DE FABRICATION ET PROCÉDÉ DE SOUDAGE D'EXTRÉMITÉS LIBRES DE BARRES CONDUCTRICES

(30) Priorität: 11.07.2022 DE 102022207084
(43) Veröffentlichungstag der Anmeldung: 17.01.2024
(73) Patentinhaber: FELSOMAT GmbH & Co. KG, 75203 Königsbach-Stein (DE)
(72) Erfinder: PESCHINA, Jürgen, 75438 Knittlingen (DE); WITTE, Fabian, 75233 Tiefenbronn (DE)
(74) Vertreter: Kohler Schmid Möbus Patentanwälte

(56) Entgegenhaltungen:
- WO-A1-2022/124454
- DE-A1- 102019 102 915
- DE-A1- 102019 108 351

## Beschreibung

Die Erfindung betrifft eine Schweißmaschine zum Verschweißen von freien Enden von Stableitern eines Stators einer elektrischen Maschine, insbesondere eines Elektromotors, aufweisend
- eine Trägerstruktur, zum direkten oder indirekten Befestigen des Stators, mit einer öffen- und schließbaren Schweißmaske,
- eine Schweißeinrichtung, insbesondere eine Laserschweißeinrichtung,
wobei die Schweißeinrichtung oberhalb der Trägerstruktur angeordnet ist, und wobei die Trägerstruktur zwischen einer Schweißstellung und einer Beschickungsstellung drehbar ist, wobei eine erste Seite der Schweißmaske in der Schweißstellung zu der Schweißeinrichtung hin ausgerichtet ist und in der Beschickungsstellung nach unten ausgerichtet ist.

Eine solche Schweißmaschine ist aus DE 10 2019 108 351 A1 bekannt.

Elektrische Maschinen, z.B. Elektromotoren, weisen verbreitet einen Stator mit einer sogenannten Spulenwicklung auf. Traditionell wird die Spulenwicklung durch Aufwickeln eines Drahtes hergestellt. Solche Wickelverfahren sind jedoch technisch sehr aufwendig und unterliegen technischen Einschränkungen. Zudem ist der Füllungsgrad (Flächenanteil des Drahtes in einem überwickelten Querschnitt) bei gewickelten Spulen begrenzt.

Spulen von Statoren elektrischer Maschinen können alternativ auch durch miteinander verbundene Stableiter, die in einen Grundkörper des Stators eingesteckt sind, ausgebildet sein. Insbesondere im Bereich elektromotorisch angetriebener Kraftfahrzeuge werden zunehmend Elektromotoren mit Statoren mit Stableitern eingesetzt. Um zwei Stableiter miteinander zu verbinden, werden deren freie Enden typischerweise miteinander verschweißt. Insbesondere wenn eine Laserschweißeinrichtung eingesetzt wird, ist es erforderlich, dass die miteinander zu verschweißenden Stableiter auf gleichen axialen Positionen bezüglich einer Längsachse des Stators enden.

Aus DE 10 2019 211 859 A1 ist es bekannt, einen Stator mittels einer Haltevorrichtung zwischen einer Biegemaschine, einer Spreizmaschine und einer Schweißmaschine für die freien Enden seiner Stableiter zu verbringen. Währenddessen bleibt der Stator in der Haltevorrichtung gehalten.

EP 3 716 455 A1 beschreibt eine Schneidvorrichtung zum Ablängen von freien Enden von Stableitern. Die Stableiter sind in mehreren Paaren von konzentrischen Lagen angeordnet, wobei jeweils freie Enden der Stableiter eines Lagenpaars verschweißt werden sollen. Die Schneidvorrichtung weist einen Stützkörper mit Öffnungen auf, durch welche die freien Enden von in radialer Richtung aufeinanderfolgenden Stableitern gesteckt werden können. Die freien Enden der Paare werden dann durch zwei gegenläufig orientierte Messer gekürzt, indem zunächst ein jeweils erster Stableiter der Paare zu dem anderen Stableiter hin abgeschnitten wird und sodann der jeweils andere Stableiter der Paare zu dem ersten Stableiter hin abgeschnitten wird. Die Schneidvorrichtung wird dann in axialer Richtung abgezogen und der Stator wird um ein Winkelinkrement weitergedreht, sodass die Schneidvorrichtung auf die nächste radial verlaufende Reihe von Stableiterenden aufgesetzt werden kann. Derart werden nacheinander alle Stableiter abgelängt.

Aus der eingangs genannten DE 10 2019 108 351 A1 ist es bekannt, beim Verschweißen der Stableiter den Stator durch eine öffen- und schließbare Schweißmaske vor Verunreinigungen wie beispielsweise Schweißspritzern zu schützen. Eine Trägerstruktur, an welcher der Stator zum Verschweißen der Stableiter befestigbar ist, ist zwischen einer Schweißstellung, in der die freien Enden nach oben weisen, und einer Beschickungsstellung, in der die freien Enden nach unten weisen, drehbar. Dadurch kann vermieden werden, dass nach dem Verschweißen beim Entfernen des Stators von der Trägerstruktur Verschmutzungen auf den Stator fallen.

DE 10 2019 102 915 A1 beschreibt ein Verfahren zum Ablängen und Positionieren von Leiterenden bei der Herstellung von Statoren elektrischer Maschinen. In einem ersten Schritt wird eine Vielzahl von Leiterelementen in eine Vielzahl von Nuten eines Statorkerns eingesteckt. In einem zweiten Schritt wird eine ringförmige Maske auf die Leiterenden gefügt. einem dritten Schritt werden sowohl die Leiterenden als auch die Maske auf eine definierte Höhe abgetragen bzw. abgelängt. Durch den spanenden Prozess, der zum Abtragen sowohl der Leiterenden als auch der Maske verwendet wird, kann eine Nut auf der Oberseite der Maske gebildet werden. In einem vierten Schritt wird die Maske um ein definiertes Maß abgesenkt, um die Leiterenden für das Verbinden freizugeben. In einem fünften Schritt werden die Leiterenden verbunden, um die Statorwicklung bereitzustellen. Die Nut kann nach dem Verschweißen der Leiterenden dazu verwendet werden, eine Vergussmasse, die zum Isolieren der Leiterenden verwendet wird, radial zu begrenzen.

Aus WO 2022/124454 A1 ist ein Herstellverfahren für Statoren bekannt, wobei Enden von U-förmigen Stableitern ausgerichtet werden. Die ausgerichteten Enden werden auf gleiche Längen abgeschnitten und verschweißt.

Ein weiteres Verfahren zum Ablängen und Positionieren von Leiterenden bei der Herstellung von Statoren elektrischer Maschinen ist aus DE 10 2019 102 915 A1 bekannt.

### Aufgabe der Erfindung

Es ist eine Aufgabe der Erfindung, eine zuverlässige und rationelle Herstellung von Statoren mit verschweißten Stableitern zu ermöglichen.

### Beschreibung der Erfindung

Diese Aufgabe wird erfindungsgemäß gelöst durch eine Schweißmaschine mit den in Anspruch 1 angegebenen Merkmale, ein Fertigungssystem gemäß Anspruch 11 sowie ein Verfahren gemäß Anspruch 12.

### Erfindungsgemäße Schweißmaschine

Erfindungsgemäß ist eine Schweißmaschine zum Verschweißen von freien Enden von Stableitern eines Stators einer elektrischen Maschine, insbesondere eines Elektromotors, vorgesehen. Die Schweißmaschine weist eine Trägerstruktur, zum direkten oder indirekten Befestigen des Stators, mit einer öffen- und schließbaren Schweißmaske, und eine Schweißeinrichtung, insbesondere eine Laserschweißeinrichtung, auf. Die Schweißeinrichtung ist oberhalb der Trägerstruktur angeordnet. Die Trägerstruktur ist zwischen einer Schweißstellung und einer Beschickungsstellung drehbar, wobei eine erste Seite der Schweißmaske in der Schweißstellung zu der Schweißeinrichtung hin ausgerichtet ist und in der Beschickungsstellung nach unten ausgerichtet ist. Die Schweißstellung und die Beschickungsstellung beschreiben eine Drehausrichtung der Trägerstruktur. Die Schweißmaschine ist dadurch gekennzeichnet, dass die Schweißmaschine weiterhin eine Nivelliereinrichtung aufweist zum Ablängen der Stableiter an den freien Enden bei in der Beschickungsstellung befindlicher Trägerstruktur.

Die Schweißmaschine ist eine Maschine (ein Apparat), die zum Verschweißen der freien Enden von Stableitern eines Stators dient. Der Stator kann direkt (unmittelbar) an der Trägerstruktur befestigt werden. Alternativ kann der Stator indirekt (mittelbar), etwa mittels eines von der Trägerstruktur separaten Halters, an der Trägerstruktur befestigt werden. Mittels des Halters kann der Stator besonders schnell an der Trägerstruktur befestigt und von der Trägerstruktur gelöst werden.

Der Stator ist grundsätzlich so an der Trägerstruktur befestigbar, dass ein Grundkörper, typischerweise umfassend ein Blechpaket, des Stators auf einer (der ersten Seite abgewandten) zweiten Seite der Schweißmaske angeordnet ist. Der Grundkörper wird dann - bei Blick auf die erste Seite - von der Schweißmaske verdeckt, so dass er vor Schweißspritzern und anderen Verschmutzungen geschützt ist. Die Stableiter eines an der Trägerstruktur befestigten Stators ragen durch die Schweißmaske hindurch. Die zu verschweißenden freien Enden der Stableiter sind auf der ersten Seite der Schweißmaske angeordnet.

Die Schweißmaske kann geöffnet und geschlossen werden. Um den Stator an der Trägerstruktur anzuordnen oder von der Trägerstruktur zu entfernen, wird die Schweißmaske grundsätzlich geöffnet. Beim Ablängen und beim Verschweißen der freien Enden ist die Schweißmaske grundsätzlich geschlossen.

Im geschlossenen Zustand der Schweißmaske sind Zwischenräume zwischen den Stableitern zumindest weitgehend, vorzugsweise vollständig, verschlossen. Evtl. anfallende Schweißspritzer oder sonstige Verschmutzungen wie beispielsweise Späne, die beim Ablängen entstehen, können sich daher bei geschlossener Schweißmaske nicht auf jenseits (hinter) der ersten Seite der Schweißmaske angeordneten Teilen, insbesondere auf dem Grundkörper des Stators, ablagern.

Die Schweißmaske weist typischerweise ein radial äußeres, im Wesentlichen kreisringförmiges Deckelement, ein radial inneres, näherungsweise kreisförmiges Deckelement und bewegliche Zwischenelemente auf. Die Zwischenelemente greifen im geschlossenen Zustand zwischen die Stableiter ein. Derart können die Zwischenräume zwischen den Stableitern, sowie die Bereiche radial außerhalb bzw. radial innerhalb der Stableiter mit relativ einfachen mechanischen Mitteln abgedeckt werden.

Die Schweißmaske ist dazu eingerichtet, im geschlossenen Zustand die Stableiter im Bereich der freien Enden zu fixieren. Die Zwischenelemente können hierzu an den Stableitern zur Anlage gebracht werden. Die Fixierung der Stableiter ermöglicht einerseits ein präzises Ablängen. Indem die Fixierung bis zum Verschweißen beibehalten wird, kann zudem sichergestellt werden, dass sich die Stableiter zwischenzeitlich nicht verschieben. Die für ein zuverlässiges Verschweißen notwendige fluchtende Ausrichtung der freien Enden in axialer Richtung bleibt somit auf einfache Weise erhalten.

Um den Stator an der Trägerstruktur zu befestigen, wird die Trägerstruktur in die Beschickungsstellung gedreht. Der Stator kann dann von oben auf die Trägerstruktur aufgesetzt und mit dieser verbunden werden.

Während sich die Trägerstruktur in der Beschickungsstellung befindet, können die freien Enden mittels der Nivelliereinrichtung abgelängt werden. In der Beschickungsstellung weisen die freien Enden nach unten. Beim Ablängen anfallende Späne fallen daher überwiegend vom Stator und der Schweißmaske weg nach unten. Die Nivelliereinrichtung kann als Schneideinrichtung zum Abschneiden der Stableiter an den freien Enden ausgebildet sein. Vorzugsweise ist die Nivelliereinrichtung mit einem Zerspanungswerkzeug ausgebildet.

Zum Verschweißen der freien Enden wird die Trägerstruktur in die Schweißstellung gedreht. In der Schweißstellung weisen die erste Seite der Schweißmaske und die zu verschweißenden freien Enden der Stableiter nach oben. Oberhalb der Trägerstruktur ist die Schweißeinrichtung der Schweißmaschine angeordnet. Die Schweißeinrichtung ist vorzugsweise als eine Laserschweißeinrichtung ausgebildet. Durch Laserschweißen können die freien Enden schnell und präzise verschweißt werden. Da die Schweißeinrichtung sich oberhalb der freien Enden befindet, ist die Gefahr, dass sich Schweißspritzer auf der Schweißeinrichtung, etwa auf einer Optik der Laserschweißeinrichtung, ablagern gering. Die (geschlossene) Schweißmaske verhindert gleichzeitig, dass Schweißspritzer oder sonstige Verschmutzungen zu unterhalb der Schweißmaske befindlichen Teilen, insbesondere zu dem Grundkörper, des Stators durchdringen können.

Zum Entfernen des Stators von der Trägerstruktur nach dem Verschweißen wird die Trägerstruktur in die Beschickungsstellung gedreht. Die Beschickungsstellung kann auch als Be- und Entladestellung bezeichnet werden. In der Beschickungsstellung weisen die erste Seite und mithin auch die (verschweißten) Enden der Stableiter nach unten. Um den Stator von der Trägerstruktur zu entfernen, wird die Schweißmaske geöffnet. Da die erste Seite, auf der sich Verschmutzungen wie Späne und/oder Schweißspritzer während des Ablängens bzw. Schweißvorgangs abgelagert haben können, beim Öffnen nach unten weist, wird vermieden, dass Schmutzpartikel auf den Stator fallen können.

Die Verwendung der Schweißmaske zum Abdecken des Stators und Fixieren der freien Enden vereint mehrere Vorteile. Die Fixierung erhöht die Präzision dieser beiden Bearbeitungsvorgänge. Insbesondere wird erreicht, dass sich miteinander zu verschweißende Stableiter, die gemeinsam abgelängt wurden, sodass sie zueinander passen, vor dem Verschweißen nicht gegeneinander verschieben. Das Abdecken schützt den Stator bei beiden Bearbeitungsvorgängen vor Verschmutzungen. Gleichzeitig wird die Handhabung des Stators vereinfacht, da dieser zum Ablängen und Verschweißen an der Trägerstruktur gehalten bleibt. Dies beschleunigt den Fertigungsablauf.

Die Stableiter können einen rechteckigen Querschnitt aufweisen. Mit solchen Stableitern kann ein besonders hoher Füllungsgrad des Stators erzielt werden. Die Stableiter erlauben es mit anderen Worten, möglichst viel Leitermaterial (typischerweise Kupfer) in Aussparungen des Grundkörpers des Stators einzubringen. Die Stableiter sind typischerweise in mehreren konzentrischen Lagen angeordnet.

Die Schweißmaschine eignet sich insbesondere zur Fertigung von Statoren für Antriebsmotoren von Kraftfahrzeugen.

Die Schweißmaschine wird vorzugsweise im Rahmen eines unten beschriebenen, erfindungsgemäßen Schweißverfahrens eingesetzt. Insbesondere kann die Schweißmaschine zur Durchführung eines unten beschriebenen, erfindungsgemäßen Verfahrens eingerichtet sein.

Vorzugsweise ist die Trägerstruktur in horizontalter Richtung verfahrbar. Die Nivelliereinrichtung ist im Wesentlichen unterhalb der Trägerstruktur, insbesondere einer Verfahrebene der Trägerstruktur, angeordnet bzw. anordenbar. Die Verfahrbarkeit der Trägerstruktur in horizontaler Richtung ist insbesondere relativ zu der Schweißeinrichtung, der Nivelliereinrichtung, ggf. einer Bürsteinrichtung und typischerweise einem Gestell der Schweißmaschine, an welchem eine oder mehrere der vorgenannten Komponenten gehalten sind, eingerichtet. Durch horizontales Verfahren können die Trägerstruktur bzw. der an der Trägerstruktur gehaltene Stator besonders einfach und schnell an unterschiedliche Stellen für unterschiedliche (Bearbeitungs-)Vorgänge wie etwa Einbringen und Entnehmen des Stators, Ablängen, Verschweißen etc. verbracht werden.

Vorteilhafterweise ist vorgesehen, dass die Schweißmaschine weiterhin eine Bürsteinrichtung aufweist. Mit der Bürsteinrichtung können die freien Enden der Stableiter nach dem Ablängen entgratet und mattiert werden. Dies kann die Qualität der Verschweißung verbessern. Zudem können die Stableiter und/oder die erste Seite der Schweißmaske nach dem Verschweißen mittels der Bürsteinrichtung gereinigt werden.

Eine besonders bevorzugte Weiterbildung ist dadurch gekennzeichnet, dass die Bürsteinrichtung unter der Schweißeinrichtung angeordnet ist, dass die Nivelliereinrichtung neben der Bürsteinrichtung angeordnet ist, und dass die Trägerstruktur über die Bürsteinrichtung und die Nivelliereinrichtung verfahrbar ist. Derart wird ein kompakter Aufbau der Schweißmaschine erhalten. Zugleich werden die erforderlichen Bewegungen der Trägerstruktur minimiert.

Bei der Bürsteinrichtung kann eine Betätigungseinrichtung zum Öffnen und Schließen der Schweißmaske vorgesehen sein. Zum Anordnen bzw. Entnehmen eines Stators wird die Trägerstruktur somit zu der Bürsteinrichtung, insbesondere über die Bürsteinrichtung, verbracht oder vorzugsweise (wenn sich die Trägerstruktur schon über der Bürsteinrichtung befindet) dort belassen. Der kompakte Aufbau und die Vermeidung unnötiger Bewegungen der Trägerstruktur werden dadurch weiter gefördert.

Die Nivelliereinrichtung kann ein rotierbares Zerspanungswerkzeug, insbesondere ein Sägeblatt oder einen Fräser, aufweisen. Derart können die freien Enden der Stableiter besonders schnell und präzise abgelängt werden. Die geschlossene Schweißmaske gewährleistet beim zerspanenden Ablängen eine präzise Ausrichtung und sichere Fixierung der Stableiter.

Es kann vorgesehen sein, dass das Zerspanungswerkzeug in vertikaler Richtung verfahrbar ist. Vorzugsweise steht das Zerspanungswerkzeug in horizontaler Richtung fest. Dies vereinfacht den Aufbau der Schweißmaschine. Eine vertikale Relativbewegung von Stator und Zerspanungswerkzeug wird durch Anheben bzw. Absenken des Zerspanungswerkzeugs erreicht. Für eine horizontale Relativbewegung von Stator und Zerspanungswerkzeug kann die Trägerstruktur verfahren werden. Zudem kann der Stator an der Trägerstruktur um seine Längsachse drehbar sein. Typischerweise ist eine vertikale Ausrichtung der Längsachse des Stators dabei eingerichtet, wenn sich die Trägerstruktur in der Beschickungsstellung oder Schweißstellung befindet.

Die Nivelliereinrichtung weist erfindungsgemäß einen Auffangbehälter für Späne auf. Der Auffangbehälter ist vorzugsweise in horizontaler Richtung feststehend angeordnet. Beim Ablängen anfallende Späne oder Stableiterabschnitte können in dem Auffangbehälter gesammelt werden. Insbesondere vermeidet der Auffangbehälter, dass sich Späne und dergleichen in der Schweißmaschine verteilen. Der Auffangbehälter kann mit einer Absaugung verbunden sein. Die Späne können somit direkt aus der Schweißmaschine abgeführt werden.

Weiter erfindungsgemäß ist vorgesehen, dass an dem Auffangbehälter ein Deckel in horizontaler Richtung verschieblich geführt ist, und dass von der Schweißmaske ein Abdeckring vorsteht, welcher in eine Ausnehmung des Deckels einführbar ist. Bei einer (horizontalen) Relativbewegung zwischen der Trägerstruktur und der Nivelliereinrichtung während des Nivellierens/Ablängens nimmt der Abdeckring den Deckel mit. An der Ausnehmung des Deckels kann eine Dichtung zur Anlage an dem Abdeckring vorgesehen sein. Ein Austritt von Spänen aus dem Auffangbehälter kann mit dieser Gestaltung besonders zuverlässig vermieden werden. Zugleich ermöglicht der Eingriff des Abdeckrings in den Deckel es, den Auffangbehälter in einfacher Weise und ohne weiteres Zutun dicht zu verschließen, indem die Nivelliereinrichtung mit dem Auffangbehälter in vertikaler Richtung an die Schweißmaske (und den Stator) angenähert wird.

Die Schweißmaschine kann eine Bildverarbeitungseinrichtung aufweisen, vorzugsweise wobei eine gemeinsame Optik für die Bildverarbeitungseinrichtung und die als Laserschweißeinrichtung ausgebildete Schweißeinrichtung vorgesehen ist. Die Bildverarbeitungseinrichtung ermöglicht es, die freien Enden der Stableiter zu erfassen, insbesondere wenn sich die Trägerstruktur in der Schweißstellung befindet. Mit der Bildverarbeitungseinrichtung kann überprüft werden, ob alle Stableiter vorhanden sind oder ob die freien Enden zu verschweißender Stableiter passend zueinander ausgerichtet sind.

Vorzugsweise ist die Schweißmaske gegenüber der Trägerstruktur drehbar. Die Drehbarkeit der Schweißmaske gegenüber der Trägerstruktur ist um eine Drehachse eingerichtet, die typischerweise senkrecht verläuft zu einer Schwenkachse zum Drehen der Trägerstruktur zwischen der Schweißstellung und der Beschickungsstellung. Die Drehachse der Schweißmaske fällt grundsätzlich mit der Längsachse eines an der Trägerstruktur gehaltenen Stators zusammen. Die Drehbarkeit der Schweißmaske vereinfacht es, eine zur Bearbeitung aller Stableiter erforderliche Bewegung in Umfangsrichtung des Stators einzurichten. Wenn sich die Trägerstruktur in der Beschickungsstellung oder der Schweißstellung befindet, ist die Drehachse typischerweise vertikal ausgerichtet.

Bei einer bevorzugten Ausführungsform ist vorgesehen, dass die Schweißmaske verschiebliche Fixierfinger zum Eingreifen zwischen die Stableiter an den freien Enden aufweist. Die verschieblichen Fixierfinger können zum Schließen der Schweißmaske, typischerweise in radialer Richtung, zwischen die Stableiter eingeschoben werden. Zum Öffnen der Schweißmaske werden die Fixierfinger, typischerweise wiederum in radialer Richtung, zurückgezogen. Mittels der Fixierfinger kann mit überschaubarem mechanischem Aufwand die erforderliche Abdeckung der Zwischenräume zwischen den Stableitern eingerichtet werden. Besonders bevorzugt sind die Fixierfinger für ein Einklemmen der Stableiter ausgebildet.

### Erfindungsgemäßes Fertigungssystem

In den Rahmen der vorliegenden Erfindung fällt auch ein Fertigungssystem aufweisend eine oben beschriebene, erfindungsgemäße Schweißmaschine und einen Halter, insbesondere Klemmhalter, mittels welchem der Stator an der Trägerstruktur befestigbar ist. Mittels des Halters kann der Stator besonders schnell an der Trägerstruktur befestigt und von der Trägerstruktur gelöst werden. Zur Befestigung an der Trägerstruktur wird der Stator typischerweise in einem in dem Halter gehaltenen Zustand bereitgestellt. Der Halter kann mitsamt dem Stator an der Trägerstruktur befestigt und von der Trägerstruktur entfernt werden. Der Halter kann zudem die Handhabung des Stators im übrigen Verlauf der Fertigung vereinfachen.

Der Halter ist vorzugsweise über ein zentrierendes Spannsystem, insbesondere ein Nullpunktspannsystem, mit der Trägerstruktur verbindbar. Auf diese Weise kann der Stator besonders präzise an der Trägerstruktur befestigt werden.

Vorzugsweise ist vorgesehen, dass der Halter verschiebliche Haltefinger zum Eingreifen zwischen die Stableiter an wenigstens einer Stirnseite eines Grundkörpers des Stators aufweist. Wenn die Finger zwischen die Stableiter eingreifen, übergreifen sie typischerweise den Grundkörper zumindest bereichsweise. Durch die Haltefinger kann einerseits der Grundkörper fixiert werden. Durch das Eingreifen der Haltefinger zwischen die Stableiter können andererseits auch die Stableiter fixiert und ausgerichtet werden. Typischerweise liegen die Haltefinger an den Stableitern an, wenn sie zwischen diese eingreifen. Zusammen mit der Schweißmaske bewirkt der Halter somit eine Fixierung der Stableiter in zwei Ebenen. Die Stableiter sind dadurch besonders sicher gehalten, sodass sie präzise abgelängt und mit geringer Fehleranfälligkeit verschweißt werden können.

Die Haltefinger der Haltevorrichtung sind grundsätzlich in radialer Richtung zwischen einer geöffneten (nach radial außen ausgerückten) und einer geschlossenen (nach radial innen eingerückten) Stellung verbringbar. In der geöffneten Stellung der Haltefinger kann der Stator in den Halter eingesetzt und aus dem Halter entnommen werden. Die Halterfinger weisen typischerweise wenigstens eine Schulter, bevorzugt zwei Schultern, zum radialen Verspannen der Stableiter auf. Dadurch können die Stableiter besonders präzise ausgerichtet werden.

### Erfindungsgemäßes Schweißverfahren

Ebenfalls in den Rahmen der vorliegenden Erfindung fällt ein Verfahren zum Verschweißen von freien Enden von Stableitern eines Stators einer elektrischen Maschine, insbesondere eines Elektromotors, mittels einer oben beschriebenen, erfindungsgemäßen Schweißmaschine, insbesondere mittels eines oben beschriebenen, erfindungsgemäßen Fertigungssystems. Das Verfahren umfasst die Schritte:
A) Anordnen des Stators an der Trägerstruktur, wobei die erste Seite der Schweißmaske und die freien Enden der Stableiter nach unten weisen, und Schließen der Schweißmaske, sodass die freien Enden von der Schweißmaske fixiert werden;
B) Ablängen der Stableiter an den freien Enden;
C) Wenden der Trägerstruktur, sodass die erste Seite und die freien Enden der Stableiter nach oben weisen;
D) Verschweißen der freien Enden;
E) Wenden der Trägerstruktur, sodass die erste Seite und die Enden der Stableiter nach unten weisen;
F) Öffnen der Schweißmaske und Entfernen des Stators von der Trägerstruktur. Die Schritte A) bis F) werden in der angegebenen Reihenfolge durchgeführt.

Die Trägerstruktur befindet sich in Schritt A) in der Beschickungsstellung. Vorzugsweise wird der Stator im Schritt A) mittels eines Halters, an welchem der Stator gehalten ist, an der Trägerstruktur befestigt. Durch das Schließen der Schweißmaske, erfolgt eine weitere Fixierung der Stableiter im Bereich der freien Enden.

Zwischen den Schritten A) und F), d. h. während der Durchführung der Schritte B) bis E), bleibt die Schweißmaske geschlossen. Die geschlossene Schweißmaske kann miteinander zu verschweißende freie Enden gegen einander pressen. Hierzu können Fixierfinger der Schweißmaske gegen die Stableiter gedrückt werden.

Das Ablängen im Schritt B) erfolgt unter Verwendung der Nivelliereinrichtung. Insbesondere können die Stableiter an den freien Enden abgesägt oder abgefräst werden.

Vor dem Verschweißen im Schritt D) wird die Trägerstruktur im Schritt C) gedreht, um die freien Enden zu der Schweißeinrichtung hin auszurichten. Das Verschweißen im Schritt D) kann sektorweise erfolgen, wobei der Stator mit der Schweißmaske nach dem Verschweißen von Stableitern in einem gewissen Winkelbereich bezüglich einer Längsachse des Stators um ein Inkrement weitergedreht wird.

Bevor die Schweißmaske im Schritt E) geöffnet wird, werden die verschweißten Enden der Stableiter nach unten ausgerichtet, indem die Trägerstruktur gedreht wird. Vorhandene Verschmutzungen, insbesondere Schweißspritzer oder Späne vom Ablängen, können somit beim Öffnen der Schweißmaske nicht auf den Stator fallen.

Vorteilhafterweise werden zwischen den Schritten B) und C) die abgelängten Enden der Stableiter gebürstet. Hierzu kann eine Bürsteinrichtung verwendet werden. Vorzugsweise ist die Bürsteinrichtung unter der Schweißeinrichtung angeordnet. Durch das Bürsten können an den Stableitern anhaftende Späne entfernt werden. Zudem kann eine Entgratung und Mattierung der freien Enden erreicht werden. Dies schafft günstige Voraussetzungen für eine optische Kontrolle und das Verschweißen mit einer Laserschweißeinrichtung.

Bei einer bevorzugten Variante des Schweißverfahrens ist vorgesehen, dass die Trägerstruktur zwischen Schritt A) und Schritt B) über die Nivelliereinrichtung verschoben wird, und dass die Trägerstruktur zwischen Schritt B) und Schritt D) unter die Schweißeinrichtung verschoben wird. Bei der Durchführung von Schritt A) befindet sich die Trägerstruktur in der Regel unter der Schweißeinrichtung und - sofern vorhanden - typischerweise über der Bürsteinrichtung. Die Trägerstruktur wird zwischen Schritt B) und D), vorzugsweise zwischen Schritt B) und C), unter die Schweißeinrichtung und - sofern vorhanden - über die Bürsteinrichtung verschoben.

Beim Ablängen der Stableiter kann der Stator mit der Schweißmaske um seine Längsachse gedreht werden. Derart kann auf einfache Weise ein Vorschub in Umfangsrichtung eingerichtet werden. Dies minimiert die zum Ablängen erforderlichen Bewegungen von Komponenten der Schweißmaschine.

Der Stator kann mehrere konzentrische Lagenpaare von miteinander zu verschweißenden Stableitern aufweisen. Es ist dann vorzugsweise vorgesehen, dass die freien Enden der Stableiter eines jeweiligen Lagenpaars auf gleicher Höhe abgelängt werden, und dass die Stableiter unterschiedlicher Lagenpaare in zunehmenden Abständen von der Schweißmaske abgelängt werden. Die Lagenpaare sind jeweils durch zwei benachbarte, konzentrische Ringe von Stableitern gebildet. Die Stableiter eines Lagenpaars werden in einem Umlauf auf derselben Höhe abgelängt, sodass sie bündig miteinander enden. Dies ist für das Verschweißen vorteilhaft. Für die Stableiter der weiteren Lagenpaare erfolgt das Ablängen in weiteren Umläufen, wobei jeweils ein größerer Abstand von der ersten Seite der Schweißmaske eingerichtet wird. Dadurch kann ein Kontakt des zum Ablängen verwendeten Werkzeugs, beispielsweise eines Zerspanungswerkzeugs, insbesondere eines Sägeblatts oder Fräsers, mit den bereits abgelängten Stableitern vermieden werden. Die Abstandszunahme zwischen benachbarten Lagenpaaren beträgt typischerweise einige Hundertstel Millimeter, beispielsweise 5 Hundertstel Millimeter.

Vorzugsweise werden beim Ablängen der Stableiter die Lagenpaare von radial innen nach radial außen abgearbeitet, wobei die Stableiter radial weiter außen liegender Lagenpaare in einem größeren Abstand von der Schweißmaske abgelängt werden als die Stableiter radial weiter innen liegender Lagenpaare. Sofern ein rotierbares Zerspanungswerkzeug verwendet wird, liegt dessen Drehachse bei dieser Vorgehensweise radial innerhalb der Stableiter. Dies ermöglicht eine gute Ausnutzung des Bauraums der Schweißmaschine bzw. eine insgesamt kompaktere Gestaltung der Schweißmaschine. Um beim Ablängen von einem radial weiter innen angeordneten zu einem radial weiter außen angeordneten Lagenpaar zu wechseln, wird vorzugsweise die Trägerstruktur verfahren. Um den Abstand von der Schweißmaske zu erhöhen, wird vorzugsweise ein Werkzeug der Nivelliereinrichtung in vertikaler Richtung abgesenkt. Eine radiale Zustellung beim Ablängen der Stableiter eines jeden der Lagenpaare kann jeweils über einen gewissen Winkelbereich, z. B. zwischen 15° und 30°, bei einer Drehung des Stators um seine Längsachse erfolgen.

Nach Schritt E) können die verschweißten Enden und/oder die erste Seite der Schweißmaske gebürstet werden. Verschmutzungen wie Schweißspritzer und/oder Späne können dadurch entfernt werden. Zum Bürsten kann die Bürsteinrichtung verwendet werden, die vorzugsweise auch beim Bürsten zwischen den Schritten B) und C) verwendet wurde. Das Bürsten der verschweißten Enden erfolgt vorzugsweise vor dem Öffnen der Schweißmaske in Schritt F).

Vor dem Verschweißen und/oder während des Verschweißens der freien Enden der Stableiter kann eine optische Kontrolle erfolgen. Insbesondere kann geprüft werden, ob alle Stableiter vorhanden sind. Alternativ oder zusätzlich kann die genaue Position der zu verschweißenden Enden ermittelt werden. Die ermittelten Positionen können bei der Steuerung des Schweißvorgangs berücksichtigt werden. Die optische Kontrolle kann mit einer Bildverarbeitungseinrichtung erfolgen, vorzugsweise wobei die Bildverarbeitungseinrichtung und eine Laserschweißeinrichtung eine gemeinsame Optik aufweisen.

Weitere Merkmale und Vorteile der Erfindung ergeben sich aus der Beschreibung, den Ansprüchen und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: ein erfindungsgemäßes Fertigungssystem umfassend eine erfindungsgemäße Schweißmaschine mit einer Laserschweißeinrichtung und einer Nivelliereinrichtung sowie einer horizontal verschieblichen Trägerstruktur zur mittelbaren Aufnahme eines Stators, der an einem Halter gehalten ist, in einer schematischen Perspektivansicht;
- Fig. 2: das Fertigungssystem von Figur 1, wobei sich die Trägerstruktur mit einem Stator unter der Laserschweißeinrichtung und über einer Bürsteinrichtung sowie einer Betätigungseinrichtung für eine Schweißmaske der Trägerstruktur befindet, in einer schematischen Schnittansicht;
- Fig. 3: einen vergrößerten Ausschnitt des Fertigungssystems von Figur 1, wobei die Betätigungseinrichtung an der Schweißmaske angreift;
- Fig. 4a: das Fertigungssystem von Figur 1, wobei sich die Trägerstruktur mit dem Stator über der Nivelliereinrichtung befindet, in einer schematischen Schnittansicht;
- Fig. 4b: einen vergrößerten Ausschnitt aus Figur 4a, wobei zu erkennen ist, dass die Nivelliereinrichtung ein Zerspanungswerkzeug und einen Auffangbehälter mit einem verschiebbaren Deckel aufweist;
- Fig. 4c: einen weiter vergrößerten Ausschnitt aus Figur 4a, wobei zu erkennen ist, dass ein an der Trägerstruktur festgelegter Halter mit Haltefingern an einem Grundkörper des Stators zwischen dessen Stableiter eingreift, und dass die Schweißmaske mit Fixierfingern nahe an freien Enden zwischen die Stableiter eingreift;
- Fig. 5a: einen vergrößerten Ausschnitt des Fertigungssystems von Figur 1, wobei die Bürsteinrichtung die Enden der Stableiter bürstet;
- Fig. 5b: einen weiter vergrößerten Ausschnitt aus Figur 5a;
- Fig. 6a: das Fertigungssystem von Figur 1, wobei die Trägerstruktur gedreht wurde, sodass die freien Enden der Stableiter zu der Laserschweißeinrichtung weisen;
- Fig. 6b: einen vergrößerten Ausschnitt aus Figur 6a;
- Fig. 7: ein schematisches Ablaufdiagramm eines erfindungsgemäßen Verfahrens zum Verschweißen der freien Enden von Stableitern eines Stators unter Verwendung des Fertigungssystems von Figur 1.

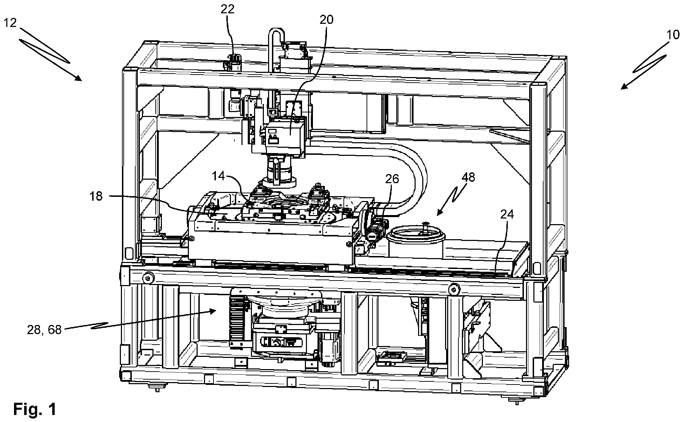

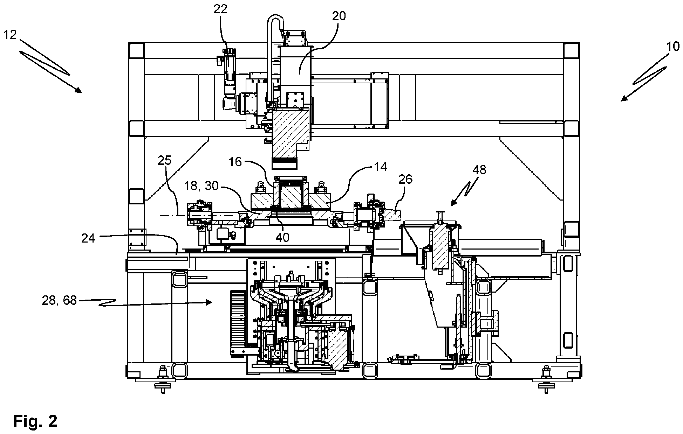

**Figur 1** zeigt eine Schweißmaschine **10.** Die Schweißmaschine 10 ist Teil eines Fertigungssystems **12,** welches neben der Schweißmaschine 10 einen Halter **14** umfasst, vergleiche auch **Figur 2****.** Mittels des Halters 14 ist ein Stator **16** an einer Trägerstruktur **18** der Schweißmaschine 10 befestigbar. Der Halter 18 kann auch außerhalb der Schweißmaschine 10 zur Handhabung bzw. Fixierung des Stators 16 an anderen Maschinen eingesetzt werden.

Die Schweißmaschine 10 weist eine Schweißeinrichtung **20,** hier eine Laserschweißeinrichtung, auf. Die Schweißeinrichtung 20 ist mittels eines Horizontalantriebs **22** in horizontaler Richtung verfahrbar. Wie nachfolgend noch im Einzelnen erläutert wird, dient die Schweißmaschine 10 zum Verschweißen von freien Enden von Stableitern des Stators 16. Die Schweißeinrichtung 20 ist oberhalb der Trägerstruktur 18 angeordnet.

Die Trägerstruktur 18 ist in horizontaler Richtung verfahrbar. Die Trägerstruktur 18 ist hierzu auf Schienen **24** geführt.

Zudem ist die Trägerstruktur 18 um eine horizontal verlaufende Schwenkachse **25** mittels eines Schwenkantriebs **26** drehbar. Die Figuren 1 und 2 zeigen eine Beschickungsstellung der Trägerstruktur 18. In der Beschickungsstellung befindet sich der Halter 14 oben auf der Trägerstruktur 18.

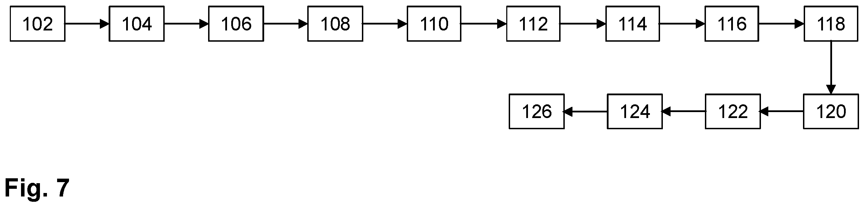

Ein jeweiliger Stator 16 wird für die Bearbeitung mit der Schweißmaschine 10 in einem ersten Schritt **102** an der Trägerstruktur 18 angeordnet, vergleiche **Figur 7****.** Der Stator 16 wird hierzu mittels des Halters 14 an der Trägerstruktur 18 befestigt. Die Trägerstruktur 18 befindet sich dabei typischerweise unter der Schweißeinrichtung 20 und über einer Betätigungseinrichtung **28,** vergleiche Figur 2.

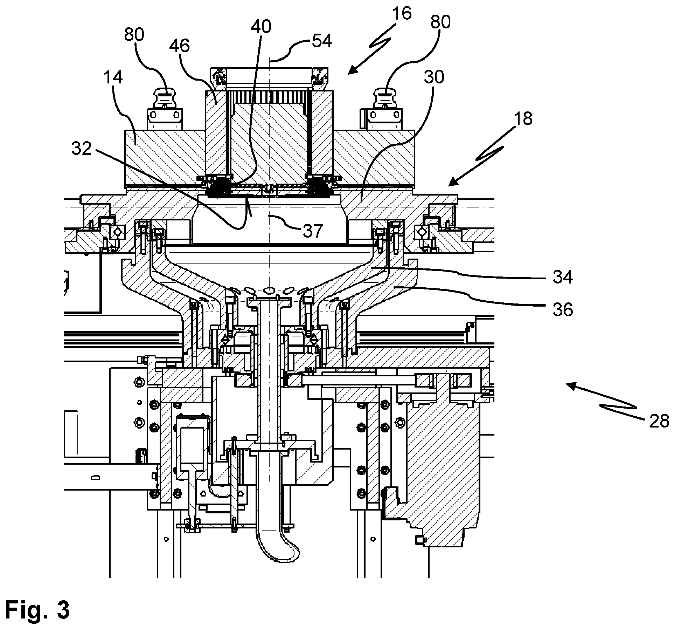

Sodann wird in einem Schritt **104** eine Schweißmaske **30** der Trägerstruktur 18 geschlossen, vergleiche **Figur 3****.** In der Beschickungsstellung weist eine erste Seite **32** der Schweißmaske 30 nach unten, d. h. zu der Betätigungseinrichtung 28 bzw. von der Schweißeinrichtung 20 weg.

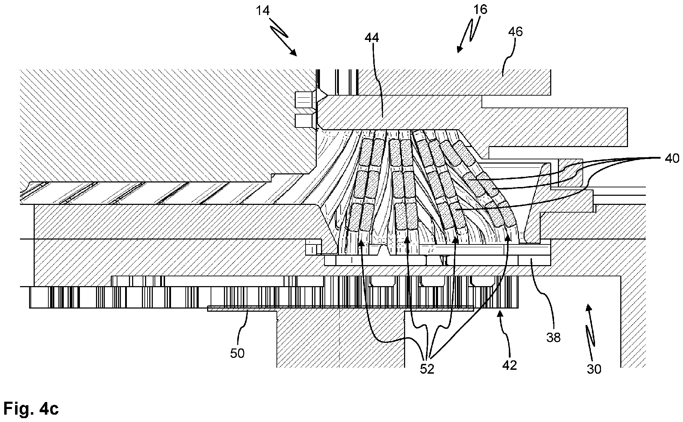

Um die Schweißmaske 30 zu schließen, wird die Betätigungseinrichtung 28 angehoben, sodass gegeneinander drehbare Betätigungselemente **34, 36** der Betätigungseinrichtung 28 an der Schweißmaske 30 angreifen. Hier ist das radial äußere Betätigungselement 36 als feststehender Gegenhalter ausgebildet; das radial innere Betätigungselement ist um eine Hochachse **37** drehbar. Wenn die Betätigungseinrichtung an der Schweißmaske 30 angreift, fällt die Hochachse 37 mit einer Längsachse **54** des Stators 16 zusammen. Durch Drehen der Betätigungselemente 34, 36 gegeneinander werden in radialer Richtung verschiebliche Fixierfinger **38** der Schweißmaske 30 zwischen Stableiter **40** des Stator 16 eingeschoben, vergleiche **Figur 4c.** Die Stableiter 40 werden nahe ihrer freien Enden **42** zwischen den Fixierfingern 38 verklemmt.

Zugleich greifen Haltefinger **44** des Halters 14 zwischen die Stableiter 40 ein. Die Haltefinger 44 liegen dabei stirnseitig an einem Grundkörper **46** des Stators 16 an. Die Stableiter 40 sind somit durch die Haltefinger 44 und die Fixierfinger 38 in zwei voneinander beabstandeten Ebenen festgelegt.

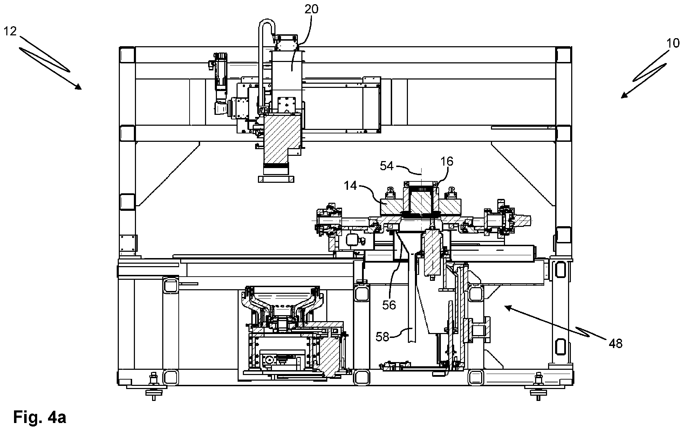

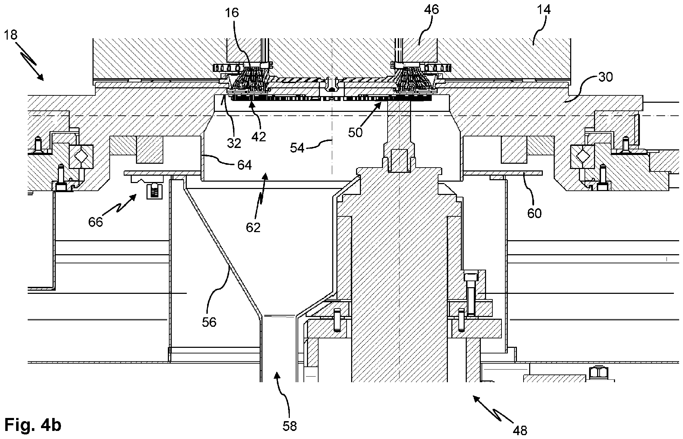

Nachdem der Stator 16 an der Trägerstruktur 18 fixiert und die Schweißmaske 30 geschlossen wurde, wird die Trägerstruktur 18 mit dem Stator 16 in einem Schritt **106** über eine Nivelliereinrichtung **48** verschoben, vergleiche **Figuren 4a****,** **4b** und 4c. Die Nivelliereinrichtung 48 dient zum Ablängen der Stableiter 40 an den freien Enden 42. Die Nivelliereinrichtung 48 weist ein rotierbares Zerspanungswerkzeug **50,** hier ein Sägeblatt, auf. Vorliegend ist das Zerspanungswerkzeug 50 vertikal höhenverstellbar, steht jedoch in horizontaler Richtung fest.

Wie in Figur 4c zu erkennen ist, sind die Stableiter 40 des Stators 16 in mehreren Lagenpaaren **52** angeordnet. Jedes Lagenpaar 52 umfasst zwei konzentrische Lagen von Stableitern 40, die miteinander verschweißt werden sollen.

Um die Stableiter 40 in einem Schritt **108** abzulängen, wird das Zerspanungswerkzeug 50 auf die gewünschte Höhe gebracht und gedreht. Zu Beginn ist das Zerspanungswerkzeug 50 radial innerhalb der freien Enden 42 der Stableiter 40 angeordnet. Durch horizontales Verschieben der Trägerstruktur 18 wird das Zerspanungswerkzeug 50 in Kontakt mit der radial innersten Lage von Stableitern 40 gebracht. Dabei wird zugleich der Stator 16 um seine Längsachse 54 gedreht, vergleiche Figuren 4a und 4b. Hierzu wird die Trägerstruktur 18 bzw. Schweißmaske 30 mittels eines nicht im einzelnen dargestellten Drehantriebs angetrieben. Derart werden die Stableiter 40 des radial innersten Lagenpaars 52 auf dieselbe Länge bzw. Höhe gebracht.

Sodann wird das Zerspanungswerkzeug 50 geringfügig abgesenkt, beispielsweise um wenige Hundertstel Millimeter. Während sich der Stator 16 weiter um die Längsachse 54 dreht, wird die Trägerstruktur 18 mit dem Stator 16 in horizontaler Richtung verschoben, sodass das Zerspanungswerkzeug 50 das nächste Lagenpaar 52 erfasst und dessen Stableiter 40 auf dieselbe Länge kürzt.

Dieses Procedere wird für die weiteren Lagenpaare 52 wiederholt. Derart werden nacheinander die Stableiter 40 aller Lagenpaare 52 in nach radial außen zunehmenden Abständen von der Schweißmaske 30 abgelängt.

An der Nivelliereinrichtung 50 ist ein Auffangbehälter **56** für Späne und abgeschnittene Teile der Stableiter 16 vorgesehen, vergleiche insbesondere Figuren 4a und 4b. Der Auffangbehälter 56 kann in einen Absaugkanal **58** münden.

Auf dem Auffangbehälter 56 liegt ein verschieblicher Deckel **60** auf. Der Deckel 60 weist eine zentrale Ausnehmung **62** auf. Die Nivelliereinrichtung 48, insbesondere das Zerspanungswerkzeug 50, ragt beim Ablängen der Stableiter 16 aus der Ausnehmung 62 nach oben heraus. Von der Schweißmaske 30 steht ein kragenförmiger Abdeckring **64** zu dem Auffangbehälter 56 hin vor. Der Abdeckring 64 greift in die Ausnehmung 62 des Deckels 60 ein. Vorzugsweise liegt der Deckel 60 dabei in Umfangsrichtung durchgängig berührend an dem Abdeckring 64 an. Der Kontakt zwischen dem Deckel 60 und dem Abdeckring 64 kann durch eine nicht näher dargestellte Dichtung vermittelt sein. Beim horizontalen Verschieben der Trägerstruktur 18 relativ zu der Nivelliereinrichtung 48 nimmt der Abdeckring 64 den Deckel 60 mit. Ein Austritt von Spänen oder dergleichen wird somit zuverlässig vermieden.

Wenn die Nivelliereinrichtung 48 gegenüber der Trägerstruktur 18 abgesenkt wird, gelangt der Abdeckring 64 außer Eingriff mit dem Deckel 60. Eine Rastmechanik **66** kann den Deckel 60 dann in einer Ruhestellung halten.

Nach dem Ablängen aller Stableiter wird das Zerspanungswerkzeug 50 abgesenkt, um es von dem Stator 16 und der Trägerstruktur 18 zu entfernen. Sodann wird die Trägerstruktur 18 mit dem Stator 16 in einem Schritt **110** unter die Schweißeinrichtung 20 verschoben.

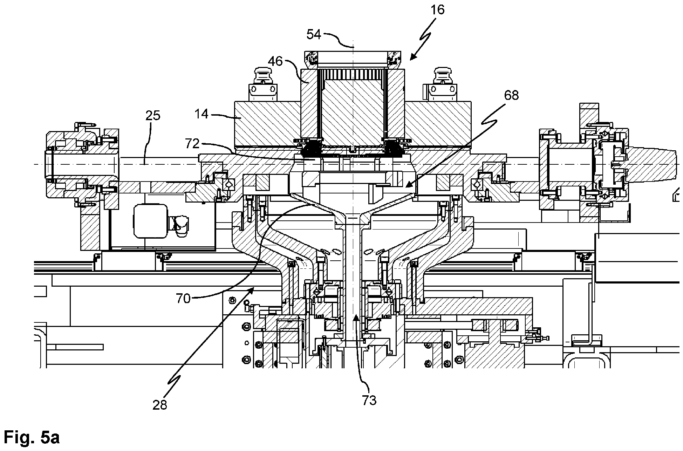

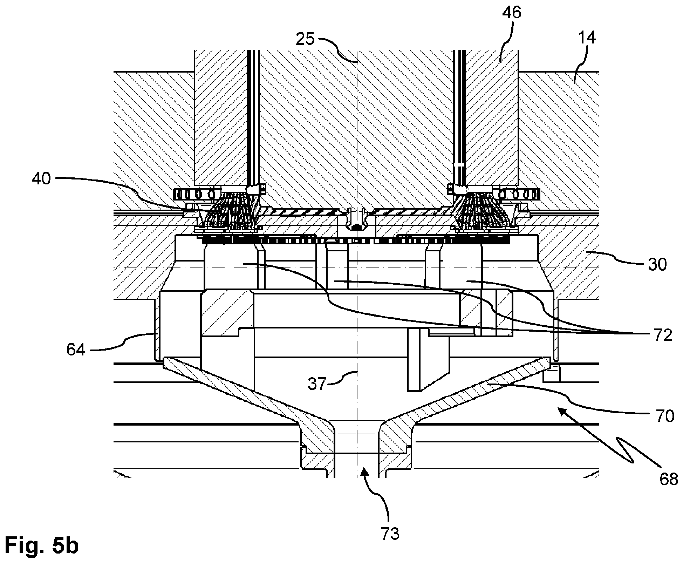

Bei der Betätigungseinrichtung 28 ist eine Bürsteinrichtung **68** angeordnet, vergleiche **Figuren 5a** und **5b****.** Die Bürsteinrichtung 68 befindet sich somit ebenfalls unter der Schweißeinrichtung 20. Die Bürsteinrichtung 68 weist einen um die Hochachse 37 drehbaren und entlang der Hochachse 37 relativ zu den Betätigungselementen 34, 36 verfahrbaren Bürstenträger **70** auf. Der Bürstenträger 70 kann in den Abdeckring 64 der Schweißmaske 30 einführbar sein. An dem Bürstenträger 70 sind mehrere Bürsten **72** befestigt. Durch Drehen des Bürstenträgers 70 mit den Bürsten 72 werden die abgelängten freien Enden 42 der Stableiter 16 in einem Schritt **112** gebürstet. Dies bewirkt einerseits eine Reinigung der freien Enden 42. Beispielsweise werden noch anhaftende Späne entfernt. Abgelöste Schmutzpartikel können durch einen Abführkanal **73** an dem Bürstenträger 70 ausgetragen werden. Andererseits werden die freien Enden 42 der Stableiter 40 beim Bürsten entgratet und ihre Oberfläche mattiert.

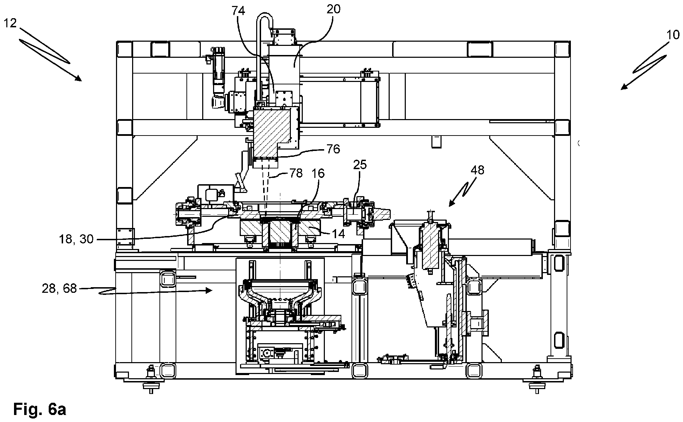

Sodann wird in einem Schritt **114** die Trägerstruktur 18 mit dem Stator 16 durch Drehen um die Schwenkachse 25 gewendet. Die freien Enden 42 der Stableiter 16 und die erste Seite 32 der Schweißmaske 30 weisen somit nach oben, vergleiche **Figur 6a****.** Diese Ausrichtung der Trägerstruktur 18 wird auch als Schweißstellung bezeichnet. In der Schweißstellung befinden sich der Stator 16 und der Halter 14 unten an der Trägerstruktur 18. Das Drehen erfolgt vorzugsweise in derjenigen Horizontalposition der Trägerstruktur, in welcher auch der Bürstvorgang durchgeführt wurde. Mit anderen Worten wird die Trägerstruktur 18 zwischen dem Bürsten und dem Wenden nicht in horizontalter Richtung verschoben.

Bevor die Stableiter 16 miteinander verschweißt werden, kann in einem Schritt **116** eine optische Kontrolle durchgeführt werden. Hierzu ist eine Bildverarbeitungseinrichtung **74** vorgesehen. Die Bildverarbeitungseinrichtung 74 und die (Laser-)Schweißeinrichtung 20 können eine gemeinsame Optik **76** besitzen. Mit der Bildverarbeitungseinrichtung 74 kann insbesondere geprüft werden, ob alle Stableiter 16 vorhanden sind und ob sich deren freie Enden 42 an den vorgesehenen Positionen befinden. Es können auch exakte Positionen der freien Enden 42 ermittelt werden, um den nachfolgenden Schweißvorgang entsprechend zu steuern.

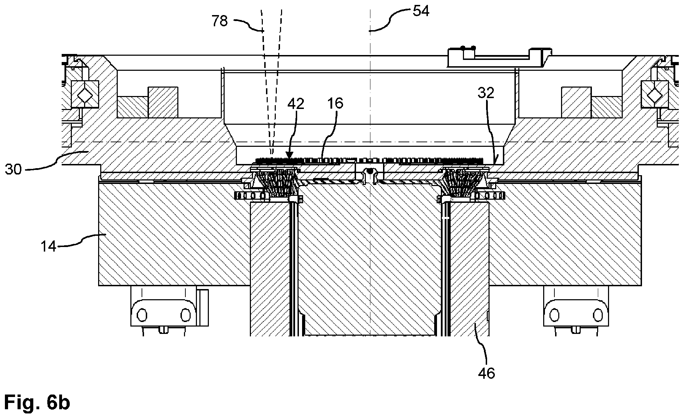

Sodann werden die Stableiter 16 in einem Schritt **118** miteinander verschweißt. Hierzu richtet die Schweißeinrichtung 20 einen Laserstrahl **78** auf die freien Enden, vergleiche Figur 6a und **Figur 6b****.** Das Verschweißen kann sektorweise erfolgen, wobei der Laserstrahl 78 in einem Umfangssegment des Stators 16 mittels der Optik 76 nacheinander auf die zu verschweißenden freien Enden 42 aller Lagenpaare 52 gerichtet wird. Sodann kann der 16 Stator mit der Schweißmaske 30 um ein Winkelinkrement um seine Längsachse 54 gedreht werden. Nun können die freien Enden 42 im nächsten Umfangssektor verschweißt werden und so fort. Der Erfolg des Schweißvorgangs kann mit der Bildverarbeitungseinrichtung 74 überprüft werden.

Nach dem Verschweißen wird die Trägerstruktur 18 mit dem Stator 16 in einem Schritt **120** um die Schwenkachse 25 gedreht, sodass die nun verschweißten Enden der Stableiter 16 und die erste Seite 32 der Schweißmaske 30 nach unten weisen. Dies entspricht der in den Figuren 1 und 2 gezeigte Beschickungsstellung. Typischerweise erfolgt auch diese Drehung der Trägerstruktur ohne vorhergehende Horizontalverschiebung der Trägerstruktur 18, d. h. in derjenigen Horizontalposition der Trägerstruktur 18, in welcher die Stableiter 40 miteinander verschweißt wurden.

Mittels der Bürsteinrichtung 68 können die verschweißten Enden der Stableiter 16 und die erste Seite 32 der Schweißmaske 30 in einem Schritt **122** gebürstet werden. Hierzu wird wie beim Bürsten vor dem Verschweißen im Schritt 112 vorgegangen, vergleiche auch Figuren 5a und 5b. Eventuell anhaftende Schweißspritzer und können dadurch entfernt werden.

Sodann wird in einem Schritt **124** die Schweißmaske 30 geöffnet. Die Betätigungseinrichtung 28 greift hierzu an der Schweißmaske 30 an, vergleiche Figur 3. Eine Drehung des Betätigungselements 34 gegenüber dem Betätigungselement 36 erfolgt in der entgegengesetzten Richtung wie beim Schließen der Schweißmaske im Schritt 104.

Der Stator 16 kann dann mitsamt des Halters 14 von der Trägerstruktur 18 gelöst werden. Ein nicht näher dargestelltes Handhabungssystem kann den Halter 14 an Koppelelementen **80** ergreifen um den Stator 16 einer weiteren Bearbeitung oder Verwendung zuzuführen.

Zusammenfassend nutzt die Erfindung eine Schweißmaske, um bei der Herstellung eines Stators dessen Stableiter zu fixieren und den Stator vor Verschmutzungen zu schützen. Die Stableiter werden zunächst für ein Verschweißen zugerichtet, indem freie Enden miteinander zu verschweißender Stableiter auf gleiche axiale Höhen gekürzt werden. Sodann werden die Stableiter an den gekürzten freien Enden miteinander verschweißt. Die Fixierung der Stableiter durch die geschlossene Schweißmaske bleibt dabei durchgängig erhalten. Der mit der Schweißmaske gehaltene Stator kann zum Kürzen der Stableiter über eine Nivelliereinrichtung und zum Verschweißen unter eine Schweißeinrichtung verschoben werden. Zudem kann der Stator mitsamt der Schweißmaske um eine, insbesondere horizontal verlaufende, Schwenkachse gedreht werden, um die freien Enden einerseits zu der Nivelliereinrichtung und andererseits zu der Schweißeinrichtung hin auszurichten. Sowohl beim Ablängen wie auch beim Verschweißen kann der Stator mitsamt der Schweißmaske um eine Längsachse des Stators gedreht werden, um eine Vorschubbewegung in Umfangsrichtung zu bewirken.

### Bezugszeichenliste

Schweißmaschine **10**
Fertigungssystems **12**
Halter **14**
Stator **16**
Trägerstruktur **18**
Schweißeinrichtung **20**
Horizontalantrieb **22** der Schweißeinrichtung 20
Schienen **24**
Schwenkachse **25**
Schwenkantrieb **26**
Betätigungseinrichtung **28**
Schweißmaske **30**
erste Seite **32**
Betätigungselemente **34, 36**
Hochachse **37**
Fixierfinger **38**
Stableiter **40**
freien Enden **42**
Haltefinger **44**
Grundkörper **46**
Nivelliereinrichtung **48**
Zerspanungswerkzeug **50**
Lagenpaare **52**
Längsachse **54** des Stators 16
Auffangbehälter **56**
Absaugkanal **58**
Deckel **60**
Ausnehmung **62**
Abdeckring **64**
Rastmechanik **66**
Bürsteinrichtung **68**
Bürstenträger **70**
Bürsten **72**
Abführkanal **73**
Bildverarbeitungseinrichtung **74**
Optik **76**
Laserstrahl **78**
Koppelelemente **80**
Anordnen **102** des Stators 16 an der Trägerstruktur 18
Schließen **104** der Schweißmaske 30
Verschieben **106** der Trägerstruktur 18
Ablängen **108** der Stableiter 16
Verschieben **110** der Trägerstruktur 18
Bürsten **112**
Wenden **114** der Trägerstruktur 18
Durchführen **116** einer optischen Kontrolle
Verschweißen **118** der Stableiter 16
Wenden **120** der Trägerstruktur 18
Bürsten **122**
Öffnen **124** der Schweißmaske 30
Entfernen **126** des Stators 16

## Patentansprüche

1. Schweißmaschine (10) zum Verschweißen von freien Enden (42) von Stableitern (40) eines Stators (16) einer elektrischen Maschine, insbesondere eines Elektromotors, aufweisend
- eine Trägerstruktur (18), zum direkten oder indirekten Befestigen des Stators (16), mit einer öffen- und schließbaren Schweißmaske (30),
- eine Schweißeinrichtung (20), insbesondere eine Laserschweißeinrichtung,
wobei die Schweißeinrichtung (20) oberhalb der Trägerstruktur (18) angeordnet ist,
und wobei die Trägerstruktur (18) zwischen einer Schweißstellung und einer Beschickungsstellung drehbar ist, wobei eine erste Seite (32) der Schweißmaske (30) in der Schweißstellung zu der Schweißeinrichtung (20) hin ausgerichtet ist und in der Beschickungsstellung nach unten ausgerichtet ist,
**dadurch gekennzeichnet,**
**dass** die Schweißmaschine (10) weiterhin eine Nivelliereinrichtung (48) aufweist zum Ablängen der Stableiter (40) an den freien Enden (42) bei in der Beschickungsstellung befindlicher Trägerstruktur (18),
**dass** die Nivelliereinrichtung (48) einen Auffangbehälter (56) für Späne aufweist,
**dass** an dem Auffangbehälter (56) ein Deckel (60) in horizontaler Richtung verschieblich geführt ist,
und **dass** von der Schweißmaske (30) ein Abdeckring (64) vorsteht, welcher in eine Ausnehmung (62) des Deckels (60) einführbar ist.

2. Schweißmaschine (10) nach Anspruch 1, **dadurch gekennzeichnet, dass** die Trägerstruktur (18) in horizontaler Richtung verfahrbar ist.

3. Schweißmaschine (10) nach einem der vorhergehenden Ansprüche, **dadurch gekennzeichnet, dass** die Schweißmaschine (10) weiterhin eine Bürsteinrichtung (68) aufweist.

4. Schweißmaschine (10) nach Anspruch 2 und 3, **dadurch gekennzeichnet, dass** die Bürsteinrichtung (68) unter der Schweißeinrichtung (20) angeordnet ist, dass die Nivelliereinrichtung (48) neben der Bürsteinrichtung (68) angeordnet ist, und dass die Trägerstruktur (18) über die Bürsteinrichtung (68) und die Nivelliereinrichtung (48) verfahrbar ist.

5. Schweißmaschine (10) nach Anspruch 3 oder 4, **dadurch gekennzeichnet, dass** bei der Bürsteinrichtung (68) eine Betätigungseinrichtung (28) zum Öffnen und Schließen der Schweißmaske (30) vorgesehen ist.

6. Schweißmaschine (10) nach einem der vorhergehenden Ansprüche, **dadurch gekennzeichnet, dass** die Nivelliereinrichtung (48) ein rotierbares Zerspanungswerkzeug (50), insbesondere ein Sägeblatt oder einen Fräser, aufweist.

7. Schweißmaschine (10) nach Anspruch 6, **dadurch gekennzeichnet, dass** Zerspanungswerkzeug (50) in vertikaler Richtung verfahrbar ist und vorzugsweise in horizontaler Richtung feststeht.

8. Schweißmaschine (10) nach einem der vorhergehenden Ansprüche, **dadurch gekennzeichnet, dass** die Schweißmaschine (10) eine Bildverarbeitungseinrichtung (74) aufweist, vorzugsweise wobei eine gemeinsame Optik (76) für die Bildverarbeitungseinrichtung (74) und die als Laserschweißeinrichtung ausgebildete Schweißeinrichtung (20) vorgesehen ist.

9. Schweißmaschine (10) nach einem der vorhergehenden Ansprüche, **dadurch gekennzeichnet, dass** die Schweißmaske (30) gegenüber der Trägerstruktur (18) drehbar ist.

10. Schweißmaschine (10) nach einem der vorhergehenden Ansprüche, **dadurch gekennzeichnet, dass** die Schweißmaske (30) verschiebliche Fixierfinger (38) zum Eingreifen zwischen die Stableiter (40) an den freien Enden (42) aufweist.

11. Fertigungssystem (12) aufweisend eine Schweißmaschine (10) nach einem der vorhergehenden Ansprüche und einen Halter (14), insbesondere Klemmhalter, mittels welchem der Stator (16) an der Trägerstruktur (18) befestigbar ist, vorzugsweise wobei der Halter (14) verschiebliche Haltefinger (44) zum Eingreifen zwischen die Stableiter (40) an wenigstens einer Stirnseite eines Grundkörpers (46) des Stators (16) aufweist.

12. Verfahren zum Verschweißen von freien Enden (42) von Stableitern (40) eines Stators (16) einer elektrischen Maschine, insbesondere eines Elektromotors, mittels einer Schweißmaschine (10) nach einem der Ansprüche 1 bis 10, insbesondere mittels eines Fertigungssystems (12) nach Anspruch 11, mit den Schritten
A) Anordnen (102) des Stators (16) an der Trägerstruktur (18), wobei die erste Seite (32) der Schweißmaske (30) und die freien Enden (42) der Stableiter (40) nach unten weisen, und Schließen (104) der Schweißmaske, sodass die freien Enden (42) von der Schweißmaske (30) fixiert werden;
B) Ablängen (108) der Stableiter (40) an den freien Enden (42);
C) Wenden (114) der Trägerstruktur (18), sodass die erste Seite (32) und die freien Enden (42) der Stableiter (40) nach oben weisen;
D) Verschweißen (118) der freien Enden (42);
E) Wenden (120) der Trägerstruktur (18), sodass die erste Seite (32) und die Enden (42) der Stableiter (40) nach unten weisen;
F) Öffnen (124) der Schweißmaske (30) und Entfernen (126) des Stators (16) von der Trägerstruktur (18).

13. Verfahren nach Anspruch 12, **dadurch gekennzeichnet, dass** zwischen den Schritten B) und C) die abgelängten Enden der Stableiter (40) gebürstet werden.

14. Verfahren nach Anspruch 12 oder 13, **dadurch gekennzeichnet, dass** die Trägerstruktur (18) zwischen Schritt A) und Schritt B) über die Nivelliereinrichtung (48) verschoben wird, und dass die Trägerstruktur (18) zwischen Schritt B) und Schritt D) unter die Schweißeinrichtung (20) verschoben wird.

15. Verfahren nach einem der Ansprüche 12 bis 14, **dadurch gekennzeichnet, dass** beim Ablängen der Stableiter (40) der Stator (16) mit der Schweißmaske (30) um seine Längsachse (54) gedreht wird.

16. Verfahren nach einem der Ansprüche 12 bis 15, **dadurch gekennzeichnet,**
**dass** der Stator (16) mehrere konzentrische Lagenpaare (52) von miteinander zu verschweißenden Stableitern (40) aufweist,
**dass** die freien Enden (42) der Stableiter (40) eines jeweiligen Lagenpaars (52) auf gleicher Höhe abgelängt werden,
und **dass** die Stableiter (40) unterschiedlicher Lagenpaare (52) in zunehmenden Abständen von der Schweißmaske (30) abgelängt werden.

17. Verfahren nach Anspruch 16, **dadurch gekennzeichnet, dass** beim Ablängen der Stableiter (40) die Lagenpaare (52) von radial innen nach radial außen abgearbeitet werden, wobei die Stableiter (40) radial weiter außen liegender Lagenpaare (52) in einem größeren Abstand von der Schweißmaske (30) abgelängt werden als die Stableiter (40) radial weiter innen liegender Lagenpaare (52).

18. Verfahren nach einem der Ansprüche 12 bis 17, **dadurch gekennzeichnet, dass** nach Schritt E) die verschweißten Enden (42) und/oder die erste Seite (32) der Schweißmaske (30) gebürstet werden.

## Claims

1. Welding machine (10) for welding free ends (42) of bar conductors (40) of a stator (16) of an electric machine, in particular of an electric motor, comprising
- a support structure (18), for direct or indirect attachment of the stator (16), having an openable and closeable welding mask (30),
- a welding device (20), in particular a laser welding device,
the welding device (20) being arranged above the support structure (18),
and the support structure (18) being rotatable between a welding position and a loading position, a first side (32) of the welding mask (30) being oriented toward the welding device (20) in the welding position and being oriented downward in the loading position,
**characterized**
**in that** the welding machine (10) further comprises a leveling device (48) for cutting the bar conductors (40) to length at the free ends (42) when the support structure (18) is in the loading position,
**in that** the leveling device (48) has a collection container (56) for chips,
**in that** a cover (60) is guided on the collection container (56) so as to be displaceable in horizontal direction,
**and in that** a cover ring (64) protrudes from the welding mask (30), which cover ring can be inserted into a recess (62) of the cover (60).

2. Welding machine (10) according to claim 1, **characterized in that** the support structure (18) is movable in horizontal direction.

3. Welding machine (10) according to any of the preceding claims,
**characterized in that** the welding machine (10) further comprises a brushing device (68).

4. Welding machine (10) according to claim 2 and 3, **characterized in that** the brushing device (68) is arranged under the welding device (20), **in that** the leveling device (48) is arranged besides the brushing device (68), **and in that** the support structure (18) is movable over the brushing device (68) and the leveling device (48).

5. Welding machine (10) according to claim 3 or 4, **characterized in that** an actuating device (28) for opening and closing the welding mask (30) is provided at the brushing device (68).

6. Welding machine (10) according to any of the preceding claims,
**characterized in that** the leveling device (48) has a rotatable cutting tool (50), in particular a saw blade or a milling cutter.

7. Welding machine (10) according to claim 6, **characterized in that** the cutting tool (50) is movable in the vertical direction and is preferably fixed in the horizontal direction.

8. Welding machine (10) according to any of the preceding claims,
**characterized in that** the welding machine (10) comprises an image processing device (74), preferably wherein a common optical system (76) is provided for the image processing device (74) and the welding device (20) which is designed as a laser welding device.

9. Welding machine (10) according to any of the preceding claims,
**characterized in that** the welding mask (30) is rotatable relative to the support structure (18).

10. Welding machine (10) according to any of the preceding claims,
**characterized in that** the welding mask (30) has displaceable fixing fingers (38) for engaging between the bar conductors (40) at the free ends (42).

11. Manufacturing system (12) comprising a welding machine (10) according to any of the preceding claims and a holder (14), in particular a clamping holder, by means of which the stator (16) can be attached to the support structure (18), preferably wherein the holder (14) has displaceable retaining fingers (44) for engaging between the bar conductors (40) on at least one end face of a main body (46) of the stator (16).

12. Method for welding free ends (42) of bar conductors (40) of a stator (16) of an electric machine, in particular of an electric motor, by means of a welding machine (10) according to any of claims 1 to 10, in particular by means of a manufacturing system (12) according to claim 11, comprising the steps
A) arranging (102) the stator (16) at the support structure (18), wherein the first side (32) of the welding mask (30) and the free ends (42) of the bar conductors (40) point downward, and closing (104) the welding mask so that the free ends (42) are fixed by the welding mask (30);
B) cutting (108) the bar conductors (40) to length at the free ends (42);
C) turning (114) the support structure (18) so that the first side (32) and the free ends (42) of the bar conductors (40) point upward;
D) welding (118) the free ends (42);
E) turning (120) the support structure (18) so that the first side (32) and the ends (42) of the bar conductors (40) point downward;
F) opening (124) the welding mask (30) and removing (126) the stator (16) from the support structure (18).

13. Method according to claim 12, **characterized in that** between steps B) and C), the cut-to-length ends of the bar conductors (40) are brushed.

14. Method according to claim 12 or 13, **characterized in that** the support structure (18) is moved over the leveling device (48) between step A) and step B), **and in that** the support structure (18) is moved under the welding device (20) between step B) and step D).

15. Method according to any of claims 12 to 14, **characterized in that** when the bar conductors (40) are cut to length, the stator (16) is rotated about its longitudinal axis (54) together with the welding mask (30).

16. The method according to any of claims 12 to 15, **characterized**
**in that** the stator (16) has a plurality of concentric layer pairs (52) of bar conductors (40) to be welded to one another,
**in that** the free ends (42) of the bar conductors (40) of a particular layer pair (52) are cut to length at the same height,
**and in that** the bar conductors (40) of different layer pairs (52) are cut to length at increasing distances from the welding mask (30).

17. Method according to claim 16, **characterized in that** when the bar conductors (40) are cut to length, the layer pairs (52) are processed from radially inward to radially outward, the bar conductors (40) of radially more outwardly located layer pairs (52) being cut to length at a greater distance from the welding mask (30) than the bar conductors (40) of radially more inwardly located layer pairs (52).

18. Method according to any of claims 12 to 17, **characterized in that** after step E), the welded ends (42) and/or the first side (32) of the welding mask (30) are brushed.

## Revendications

1. Machine de soudage (10) permettant de souder des extrémités libres (42) de barres conductrices (40) d'un stator (16) d'une machine électrique, en particulier d'un moteur électrique, comprenant
- une structure de support (18), permettant une fixation directe ou indirecte du stator (16), comprenant un masque de soudage (30) pouvant être ouvert et soudé,
- un dispositif de soudage (20), en particulier un dispositif de soudage au laser, dans laquelle le dispositif de soudage (20) est agencé au-dessus de la structure de support (18),
et dans laquelle la structure de support (18) est rotative entre une position de soudage et une position de chargement, dans laquelle un premier côté (32) du masque de soudage (30) est orienté vers le dispositif de soudage (20) dans la position de soudage et est orienté vers le bas dans la position de chargement,
**caractérisée en ce que**
la machine de soudage (10) présente en outre un dispositif de nivellement (48) afin d'ajuster en longueur les barres conductrices (40) au niveau des extrémités libres (42) lorsque la structure de support (18) se trouve en position de chargement,
le dispositif de nivellement (48) présente un récipient collecteur (56) destiné aux copeaux,
un couvercle (60) est guidé de manière coulissante au niveau du récipient collecteur (56) dans la direction horizontale,
et un anneau de recouvrement (64) fait saillie à partir du masque de soudage (30) et peut être inséré dans un évidement (62) du couvercle (60).

2. Machine de soudage (10) selon la revendication 1, **caractérisée en ce que** la structure de support (18) peut être déplacée dans la direction horizontale.

3. Machine de soudage (10) selon l'une quelconque des revendications précédentes, **caractérisée en ce que** la machine de soudage (10) présente en outre un dispositif de brossage (68).

4. Machine de soudage (10) selon les revendications 2 et 3, **caractérisée en ce que** le dispositif de brossage (68) est agencé sous le dispositif de soudage (20), **en ce que** le dispositif de nivellement (48) est agencé à côté du dispositif de brossage (68), et **en ce que** la structure de support (18) peut être déplacée par l'intermédiaire du dispositif de brossage (68) et du dispositif de nivellement (48).

5. Machine de soudage (10) selon la revendication 3 ou 4, **caractérisée en ce qu'**un dispositif d'actionnement (28) permettant d'ouvrir et de fermer le masque de soudage (30) est prévu auprès du dispositif de brossage (68).

6. Machine de soudage (10) selon l'une quelconque des revendications précédentes, **caractérisée en ce que** le dispositif de nivellement (48) présente un outil rotatif de coupe par enlèvement de copeaux (50), en particulier une lame de scie ou une fraise.

7. Machine de soudage (10) selon la revendication 6, **caractérisée en ce que** l'outil de coupe par enlèvement de copeaux (50) peut être déplacé dans la direction verticale et reste de manière préférée fixe dans la direction horizontale.

8. Machine de soudage (10) selon l'une quelconque des revendications précédentes, **caractérisée en ce que** la machine de soudage (10) présente un dispositif de traitement d'image (74), dans laquelle une optique (76) commune destinée au dispositif de traitement d'image (74) et au dispositif de soudage (20) réalisé sous la forme d'un dispositif de soudage au laser est de manière préférée prévue.

9. Machine de soudage (10) selon l'une quelconque des revendications précédentes, **caractérisée en ce que** le masque de soudage (30) est rotative rapport à la structure de support (18).

10. Machine de soudage (10) selon l'une quelconque des revendications précédentes, **caractérisée en ce que** le masque de soudage (30) présente des doigts d'immobilisation (38) coulissants permettant une mise en prise entre les barres conductrices (40) au niveau des extrémités libres (42).

11. Système de fabrication (12) comprenant une machine de soudage (10) selon l'une quelconque des revendications précédentes et un support (14), en particulier un support de serrage, au moyen duquel le stator (16) peut être fixé à la structure de support (18), de manière préférée dans lequel le support (14) présente des doigts de retenue (44) coulissants permettant une mise en prise entre les barres conductrices (40) au niveau d'au moins une face frontale d'un corps de base (46) du stator (16).

12. Procédé de soudage d'extrémités libres (42) de barres conductrices (40) d'un stator (16) d'une machine électrique, en particulier d'un moteur électrique, au moyen d'une machine de soudage (10) selon l'une quelconque des revendications 1 à 10, en particulier au moyen d'un système de fabrication (12) selon la revendication 11, comprenant les étapes consistant à :
A) agencer (102) le stator (16) au niveau de la structure de support (18), dans lequel le premier côté (32) du masque de soudage (30) et les extrémités libres (42) des barres conductrices (40) regardent vers le bas, et fermer (104) le masque de soudage de sorte que les extrémités libres (42) sont immobilisées par le masque de soudage (30) ;
B) ajuster en longueur (108) les barres conductrices (40) au niveau des extrémités libres (42) ;
C) tourner (114) la structure de support (18) de sorte que le premier côté (32) et les extrémités libres (42) des barres conductrices (40) regardent vers le haut ;
D) souder (118) les extrémités libres (42) ;
C) tourner (120) la structure de support (18) de sorte que le premier côté (32) et les extrémités libres (42) des barres conductrices (40) regardent vers le bas ;
F) ouvrir (124) le masque de soudage (30) et retirer (126) le stator (16) de la structure de support (18).

13. Procédé selon la revendication 12, **caractérisé en ce que**, entre les étapes B) et C), les extrémités ajustées en longueur des barres conductrices (40) sont brossées.

14. Procédé selon la revendication 12 ou 13, **caractérisé en ce que** la structure de support (18) est coulissée entre l'étape A) et l'étape B) par l'intermédiaire du dispositif de nivellement (48), et **en ce que** la structure de support (18) est coulissée sous le dispositif de soudage (20) entre l'étape B) et l'étape D).

15. Procédé selon l'une quelconque des revendications 12 à 14, **caractérisé en ce que**, lors de l'ajustement en longueur des barres conductrices (40), le stator (16) est tourné, avec le masque de soudage (30), autour de son axe longitudinal (54).

16. Procédé selon l'une quelconque des revendications 12 à 15, **caractérisé en ce que**
le stator (16) présente plusieurs paires de couches (52) concentriques de barres conductrices (40) à souder les unes aux autres,
les extrémités libres (42) des barres conductrices (40) d'une paire de couches (52) respective sont ajustées en longueur à la même hauteur,
et les barres conductrices (40) de paires de couches (52) différentes sont ajustées en longueur à des distances croissantes du masque de soudage (30).

17. Procédé selon la revendication 16, **caractérisé en ce que**, lors de l'ajustement en longueur des barres conductrices (40), les paires de couches (52) sont usinées depuis l'intérieur radialement vers l'extérieur radialement, dans lequel les barres conductrices (40) des paires de couches (52) situées plus loin à l'extérieur radialement sont ajustées en longueur à une plus grande distance du masque de soudage (30) que les barres conductrices (40) de paires de couches (52) situées plus loin radialement à l'intérieur.

18. Procédé selon l'une quelconque des revendications 12 à 17, **caractérisé en ce que**, après l'étape E), les extrémités (42) soudées et/ou le premier côté (32) du masque de soudage (30) sont brossé(e)s.
